# EUROPÄISCHE PATENTSCHRIFT

(11) **EP 0 946 892 B1**
(45) Veröffentlichungstag und Bekanntmachung des Hinweises auf die Patenterteilung: **26.11.2003**
(21) Anmeldenummer: 98955371.4
(22) Anmeldetag: 06.10.1998
(51) Int. Cl.: G02B 21/26, G02B 21/08

(54) **MIKROSKOPKONDENSOR MIT INTEGRIERTER AUFFANGWANNE**
MICROSCOPE CONDENSER WITH AN INTEGRATED CATCH PAN
CONDENSEUR DE MICROSCOPE POURVU D'UNE CUVETTE COLLECTRICE INTEGREE

(30) Priorität: 23.10.1997 DE 19746661
(43) Veröffentlichungstag der Anmeldung: 06.10.1999
(73) Patentinhaber: Leica Microsystems Wetzlar GmbH, 35530 Wetzlar (DE)
(72) Erfinder: GAUL, Norbert, D-35606 Solms-Oberbiel (DE); WIEBER, Karl, D-35614 Asslar-Berghausen (DE)
(74) Vertreter: Stamer, Harald
(86) Internationale Anmeldenummer: DE9802954
(87) Internationale Veröffentlichungsnummer: WO99022263

(56) Entgegenhaltungen:
- EP-A- 0 029 238
- EP-A- 0 100 475
- DE-A- 19 541 233
- US-A- 4 981 345

## Beschreibung

Die Erfindung betrifft einen Mikroskopkondensor, gemäß dem Oberbegriff des Patentanspruchs 1.

Bekannte Mikroskope für die Untersuchung von lebenden Proben bzw. Zellen weisen ein Mikroskopstativ mit einem Objektivrevolver und einem unterhalb des Objektivrevolvers vorgesehenen Objekttisch bzw. Objekthalter auf. Auf dem Tisch bzw. am Objekthalter ist ein Glasbehälter mit einer Flüssigkeit zur Aufnahme des lebenden Präparates vorgesehen. Unterhalb dieses Glasbehälters ist ein Mikroskopkondensor höhenverschiebbar am Mikroskopstativ angeordnet.

Derartige Mikroskope werden z.B in den Patentschriften EP-A-0 029 238, EP-A- 0100 475 und DE-A- 19 541 233 beschrieben.

Der Glasbehälter ist bei derartigen IN-VITO- bzw. IN-VITRO-Untersuchungen beispielsweise als Petrischale, Badkammer oder Perfusionskammer ausgebildet. Als Flüssigkeit wird dabei eine temperierte Nährlösung, beispielsweise eine Zucker- oder eine Salzlösung, verwendet. Diese Nährlösung wird über einen Zu- und Ablauf fortlaufend im Glasbehälter ausgetauscht. Bedingt durch diesen ständigen Flüssigkeitsaustausch müssen relativ große Flüssigkeitsmengen bevorratet werden.

Bei derartigen Untersuchungen werden außerdem steuerbare Mikro-Manipulatoren zur Bearbeitung der Zelle bzw. der Probe verwendet. Aus abbildungsoptischen Gründen sind die verwendeten Glasbehälter relativ dünnwandig ausgebildet und dementsprechend leicht zerbrechlich. Durch Unachtsamkeit bei der Betätigung der Manipulatoren oder auch bei der unsachgemäßen Betätigung der Fokussiereinrichtung bzw. der Kondensoreinrichtung können die Glasbehälter beschädigt und undicht werden.

Bei einem derartigen Glasbruch läuft die im Glasbehälter enthaltene und die ständig neu zugeführte Flüssigkeit auf den Mikroskopkondensor und die Teile des darunterliegenden Mikrokopstativs. Durch die Aggressivität der verwendeten Flüssigkeit, beispielsweise eine Zucker- und/oder Salz-Nährlösung können dabei die empfindlichen optischen Bauteile, wie Blenden, Phasenringe, Linsen, Filter u.ä. im Mikroskopkondensor und/oder im Mikroskopstativ beschädigt werden.

Es ist daher Aufgabe der vorliegenden Erfindung, bei einer derartigen Mikroskopanordnung sicherzustellen, daß auch bei einem Bruch des Glasbehälters die austretende Flüssigkeit nicht in den Mikroskopkondensor und in das Mikroskopstativ eindringen kann.

Diese Aufgabe wird erfindungsgemäß durch die im kennzeichnenden Teil des Patentanspruches 1 angegebenen Merkmale gelöst. Vorteilhafte Weiterbildungen sind Gegenstand der Unteransprüche.

Mit der Erfindung wurde erreicht, daß bei einem Bruch des Glasbehälters die austretende Flüssigkeit an der Halterung des Glasbehälters vorbei zunächst über den Kondensorkopf abläuft und dann von der im Mikroskopkondensor integrierten Auffangwanne aufgenommen wird. Es hat sich von Vorteil erwiesen, wenn in der Auffangwanne ein Schlauchanschluß zur Ableitung der Flüssigkeit integriert ist. Damit wird sichergestellt, daß auch größere Mengen von nachlaufender Nährlösung sicher aufgefangen und abgeleitet werden können. Der Ablauf der Flüssigkeit über den Kondensorkopf ist relativ unproblematisch, da dessen Gehäuse einstückig ausgebildet und die Frontlinse so beschichtet und eingekittet ist, daß dort keine Flüssigkeit eindringen kann und eine einfache Reinigung möglich ist.

Die Erfindung wird anhand eines Ausführungsbeispiels mit Hilfe der schematischen Zeichnung näher erläutert. Es zeigen:
- Fig. 1:: einen Seitenansicht der Mikroskopanordnung
- Fig. 2:: eine Aufsicht auf den Mikroskopkondensor
- Fig. 3:: einen Schnitt entlang der Linie D-D (Fig. 2) durch den Mikroskopkondensor

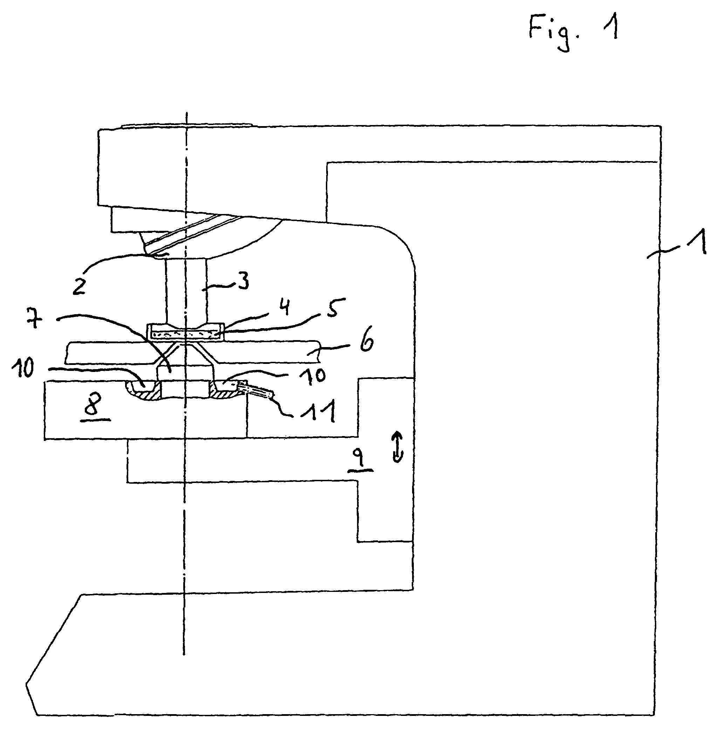

Die Figur 1 zeigt ein Mikroskopstativ 1 mit einem Objektivrevolver 2 und einem daran angeordneten Objektiv 3. Das Objektiv 3 ragt in einen Glasbehälter 4, in dem eine Flüssigkeit 5 und eine nicht mit dargestellte Probe enthalten sind. Der Glasbehälter 4 wird von einem Objekthalter 6, beispielsweise einen Mikroskoptisch, gehalten, der so ausgebildet ist, daß vom Glasbehälter auslaufende Flüssigkeit unterhalb desselben durch die Beleuchtungsöffnung hindurch abtropfen kann. Unter dem Boden des Glasbehälters 4 ist ein Mikroskopkondensor 8 mit einem Kondensorkopf 9 angeordnet. Der Mikroskopkondensor 8 ist über eine Zustelleinrichtung 9 in Doppelpfeilrichtung verschieblich am Mikroskopstativ 1 angeordnet. Der Mikroskopkondensor 8 weist eine als Auffangwanne 10 ausgebildete umlaufende Vertiefung auf, die mit einem Schlauchanschluß 11 ausgestattet ist. Die Vertiefung ist so dimensioniert, daß sie z. B. den Flüssigkeitsinhalt des Glasbehälters 4 aufnehmen kann, wenn der Schlauchanschluß 11 geschlossen ist.

Die Figur 2 zeigt eine Aufsicht auf den Mikroskopkondensor 8 mit dem Kondensorgehäuse 12 und den Zentriereinrichtungen 13, die mit Ringblenden (nicht mit dargestellt) im Innern des Kondensorgehäuses verbunden sind. Um den Kondensorkopf 7 herum ist im Mikroskopkondensor 8 die ringförmig ausgebildete Auffangwanne 10 vorgesehen, in deren Boden eine Bohrung 14 für den Schlauchanschluß 11 angeordnet ist, der selbstverständlich auch geschlossen werden kann.

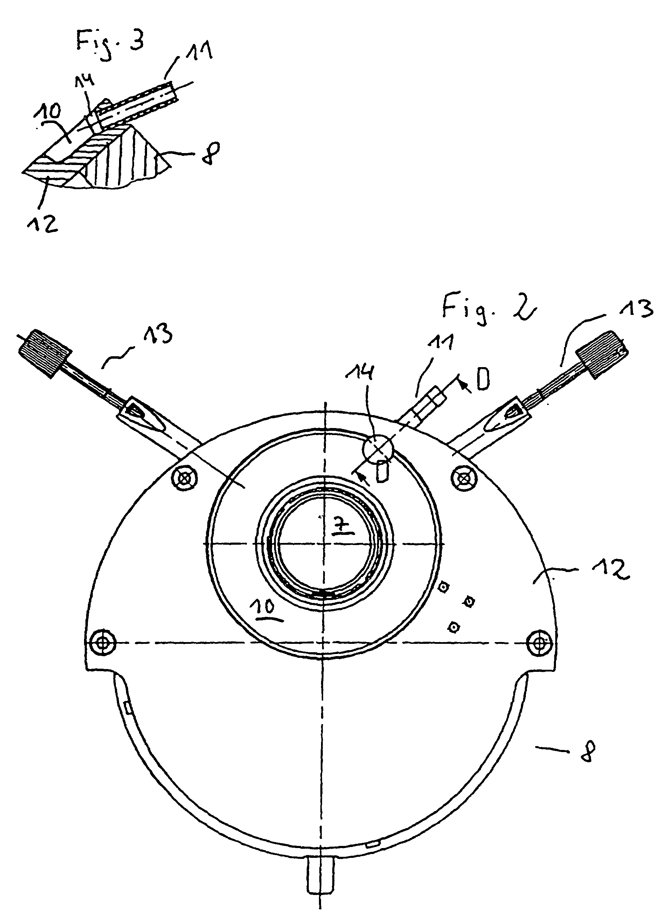

Die Figur 3 zeigt einen Schnitt entlang der Linie D-D aus der Fig. 2 durch den Mikroskopkondensor 8 mit dem Kondensorgehäuse 12, der darin angeordneten Auffangwanne 10, der Bohrung 14 und dem schräggestellt angeordneten Schlauchanschluß 11.

Bei einem Bruch des Glasbehälters 4 läuft die im Glasbehälter 4 enthaltene und die ständig neu zugeführte Flüssigkeit 5 über den Kondensorkopf 7 in die Auffangwanne 10 und wird von dort über den Schlauchanschluß 11 und einen darin befestigten, in den Zeichnungen jedoch nicht mit dargestellten, Schlauch abgeleitet.

### Bezugszeichenliste

- 1-: Mikroskopstativ
- 2-: Objektivrevolver
- 3-: Objektiv
- 4-: Glasbehälter
- 5-: Flüssigkeit
- 6-: Objekthalter
- 7-: Kondensorkopf
- 8-: Mikroskopkondensor
- 9-: Zustelleinrichtung für 8
- 10-: Auffangwanne
- 11-: Schlauchanschluß
- 12-: Kondensorgehäuse
- 13-: Zentriereinrichtung
- 14-: Bohrung

## Patentansprüche

1. Mikroskopkondensor (8) mit einem Kondensorkopf (7), wobei der Mikroskopkondensor (8) bewegbar an einem Mikroskopstativ (1) befestigt ist, und mit einer über dem Kondensorkopf (7) angeordneten Halteeinrichtung (6) für einen mit einer Flüssigkeit (5) gefügten Behälter (4), der eine lebende Probe oder Zelle zur Untersuchung enthält, **dadurch gekennzeichnet, daß** der Mikroskopkondensor (8) eine Auffangwanne (10) für übergelaufene Flüssigkeit (5) aufweist.

2. Mikroskopkondensor (8) nach Anspruch 1, **dadurch gekennzeichnet, daß** die Auffangwanne (10) als eine um den Kondensorkopf (7) angeordnete Vertiefung im Gehäuse (12) des Mikroskopkondensors (8) ausgebildet ist.

3. Mikroskopkondensor (8) nach Anspruch 1 oder Anspruch 2, **dadurch gekennzeichnet, daß** in der Auffangwanne (10) ein Schlauchanschluß (11) zur Ableitung der Flüssigkeit (5) vorgesehen ist.

## Claims

1. Microscope condenser (8) with a condenser head (7), the microscope condenser (8) being fastened to a microscope stand (1) in a manner which allows it to move, and with a holding device (6), arranged above the condenser head (7) for a container (4) which is filled with a liquid (5) and contains a living sample or cell for examination, **characterized in that** the microscope condenser (8) has a catch pan (10) for liquid (5) that has overflowed.

2. Microscope condenser (8) according to Claim 1, **characterized in that** the catch pan (10) is designed as a depression in the housing (12) of the microscope condenser (8), said depression being arranged around the condenser head (7).

3. Microscope condenser (8) according to Claim 1 or Claim 2, **characterized in that** a hose connection (11) for draining away the liquid (5) is provided in the catch pan (10).

## Revendications

1. Condenseur de microscope (8) avec une tête de condenseur (7), le condenseur de microscope (8) étant fixé de manière à pouvoir être déplacé sur un support de microscope (1), et comprenant un dispositif de fixation (6) disposé au-dessus de la tête de condenseur (7) pour un récipient (4) rempli d'un liquide (5), qui contient un échantillon ou une cellule vivant(e) à examiner, **caractérisé en ce que** le condenseur de microscope (8) présente une cuvette collectrice (10) pour le liquide (5) ayant débordé.

2. Condenseur de microscope (8) selon la revendication 1, **caractérisé en ce que** la cuvette collectrice (10) est réalisée sous forme d'un renfoncement dans le boîtier (12) du condenseur de microscope (8), disposé autour de la tête de condenseur (7).

3. Condenseur de microscope (8) selon la revendication 1 ou 2, **caractérisé en ce que** l'on prévoit dans la cuvette collectrice (10) un raccord à tuyau flexible (11) pour l'évacuation du liquide (5).
